# EUROPÄISCHE PATENTANMELDUNG

(11) **EP 4 745 879 A1**
(43) Veröffentlichungstag der Anmeldung: **20.05.2026**
(21) Anmeldenummer: 25172679.0
(22) Anmeldetag: 25.04.2025
(51) Int. Cl.: G06T 7/00

(54) **PRÜF-VORRICHTUNG UND PRÜF-VERFAHREN ZUR ÜBERPRÜFUNG VON MEDIZINISCHEN BILDERN**

(71) Anmelder: Siemens Healthineers AG, 91301 Forchheim (DE)
(72) Erfinder: Schweikert, Benjamin, 91468 Gutenstetten (DE)
(74) Vertreter: Siemens Healthineers Patent Attorneys

(57) **Zusammenfassung**

Die Erfindung betrifft eine Prüf-Vorrichtung (12) zur Überprüfung von medizinischen Bildern (D), die Prüf-Vorrichtung (12) umfassend:
- eine Datenschnittstelle (13) ausgelegt zum Zugreifen auf Bilddaten (D) von medizintechnischen Bildgebungssystemen (1),
- ein maschinenlernfähiges Prüfmodul (14), welches dazu trainiert worden ist, Bildartefakte (A) in Bilddaten (D) zu erkennen,
- eine Datenschnittstelle (13) ausgelegt zum Ausgeben von Informationen zu den erkannten Bildartefakten (A),
wobei die Prüf-Vorrichtung (12) dazu ausgelegt ist, aufgenommene Bilddaten (D) zu empfangen und/oder automatisch auf Bilddaten (D) in einem Speicher zuzugreifen, automatisch an das Prüfmodul (14) zur Verarbeitung zu geben und Ergebnisse des Prüfmoduls (14) auszugeben. Des Weiteren umfasst die Erfindung ein Prüf-Verfahren, eine Steuereinrichtung und ein medizintechnisches Bildgebungssystem.

## Beschreibung

Die Erfindung betrifft eine Prüf-Vorrichtung und ein Prüf-Verfahren zur Überprüfung von medizinischen Bildern, eine Steuereinrichtung für ein medizintechnisches Bildgebungssystem und ein medizintechnisches Bildgebungssystem.

Bei der medizinischen Bildgebung kann es zu Bildartefakten kommen. Diese können z.B. falsche Pixel, Zeilen oder Spalten in Projektionsbildern sein aber auch recht komplizierte Erscheinungen bei rekonstruierten Bildern. Beispielsweise treten bei CT-Aufnahmen immer wieder Bildartefakte in den berechneten bzw. rekonstruierten Bildern in Form von bekannten "Bandartefakten" oder "Center Dot"-Artefakten auf.

Für Hersteller von medizintechnischen Bildgebungssystemen, z.B. CT-Systemen, wäre es nun vorteilhaft zu wissen, dass Bildartefakte auftreten, um die Systeme zu verbessern oder Wartungen vorzunehmen. Derzeit wird das Auftreten von Bildartefakten jedoch einem Hersteller nur mitgeteilt, wenn der Betreiber eines medizintechnischen Bildgebungssystems den Hersteller von dem Auftreten von Bildartefakten aktiv informiert.

Zudem wäre es für den Hersteller vorteilhaft, nähere Informationen zu Bildartefakten zu erhalten, z.B. welche Artefakte aufgetreten sind und idealerweise auch wann bzw. bei welchen Untersuchungen diese aufgetreten sind.

Derzeit sind Hersteller auf Informationen der Betreiber angewiesen. Es werden dabei Hinweise auf Artefakte mühevoll von Hand analysiert und versucht ein gewisses Clustering durchzuführen, um damit die Ursache von aufgetretenen Artefakten zu ermitteln.

Es ist eine Aufgabe der vorliegenden Erfindung, eine Prüf-Vorrichtung und ein Prüf-Verfahren zur Überprüfung von medizinischen Bildern, eine Steuereinrichtung für ein medizintechnisches Bildgebungssystem und ein medizintechnisches Bildgebungssystem anzugeben, mit denen die oben beschriebenen Nachteile vermieden werden.

Diese Aufgabe wird durch eine Prüf-Vorrichtung gemäß Patentanspruch 1, ein Prüf-Verfahren gemäß Patentanspruch 9, eine Steuereinrichtung gemäß Patentanspruch 12 und ein medizintechnisches Bildgebungssystem gemäß Patentanspruch 13 gelöst.

Eine erfindungsgemäße Prüf-Vorrichtung dient zur Überprüfung von medizinischen Bildern. Sie umfasst die folgenden Komponenten:
- eine Datenschnittstelle ausgelegt zum Zugreifen auf Bilddaten von medizintechnischen Bildgebungssystemen,
- ein maschinenlernfähiges Prüfmodul, welches dazu trainiert worden ist, Bildartefakte in Bilddaten zu erkennen,
- eine Datenschnittstelle ausgelegt zum Ausgeben von Informationen zu den erkannten Bildartefakten,
wobei die Prüf-Vorrichtung dazu ausgelegt ist, aufgenommene Bilddaten zu empfangen und/oder automatisch auf Bilddaten in einem Speicher zuzugreifen, automatisch an das Prüfmodul zur Verarbeitung zu geben und Ergebnisse des Prüfmoduls (automatisch) auszugeben.

Die Prüf-Vorrichtung dient zur Überprüfung von medizinischen Bildern, also von Bilddaten von digital aufgenommenen Bildern. Diese Bilder können einfache Röntgenbilder (Radiographiebilder) sein oder auch MRT- oder CT-Bilder, also aus Rohdaten rekonstruierte Bilder. Im Folgenden werden diese durch die "Bilddaten" verkörpert, die bei einfachen Radiographiebildern die Pixel der Bilder umfassen, bei komplexeren Bildern jedoch alternativ zu den Voxeln von rekonstruierten Bildern auch deren Rohdaten sein können, also z.B. k-Raum Daten bei MRT-Bildern oder Rohdaten von CT-Bildern. Es ist besonders bevorzugt, das Verfahren auf rekonstruierte CT-Bilder anzuwenden.

Die genannten Datenschnittstellen können ein und dieselbe Datenschnittstelle sein, die sowohl zum Empfang als auch zum Ausgeben von Daten ausgelegt ist. Es können aber auch unterschiedliche Datenschnittstellen vorhanden sein.

Das Zugreifen auf Bilddaten von medizintechnischen Bildgebungssystemen umfasst den Empfang von neu aufgenommenen Bildern (insbesondere von Rohdaten oder rekonstruiertem Daten), kann aber alternativ oder zusätzlich das Auslesen von Speicherbereichen umfassen, z.B. einer Datenbank mit abgespeicherten Bildern (in Form von Bilddaten). Beispielsweise kann es vorteilhaft sein, jedes neu aufgenommene Bild direkt auf Artefakte zu überprüfen. Jedoch kann es auch vorteilhaft sein, insbesondere wenn rekonstruierter Bilder überprüft werden, erst einmal abzuwarten, bis alles Notwendige erfolgt ist. Insbesondere wenn die Überprüfung eher langfristiger, statistischer Art sein soll, kann es von Vorteil sein, die Überprüfung zu Zeiten durchzuführen, wenn wenig Betrieb bzw. Rechenauslastung herrscht, z.B. des Nachts und/oder an Wochenenden. Hier ist das automatische Zugreifen besonders vorteilhaft, weil dadurch kein Personal benötigt wird.

Das maschinenlernfähige Prüfmodul stellt das Herz der Prüf-Vorrichtung dar. Es wurde dazu trainiert, Bildartefakte in Bilddaten zu erkennen. Dies erfolgte bevorzugt indem Bilddaten des zu überprüfenden Typs, z.B. Projektionsbilder, rekonstruierte Bilder oder Rohdaten, als Trainings-Datensätze zur Verfügung gestellt werden und zu jedem Trainings-Datensatz eine Grundwahrheit vorliegt, die Aussagen über Artefakte macht. Hier hängt es von der Art der gewünschten Aussage ab, welche Grundwahrheit verwendet werden soll. Ist z.B. nur gewünscht, dass festgestellt werden soll, ob ein Artefakt vorliegt oder nicht, können die Trainings-Datensätze mit einer Grundwahrheit verknüpft sein, die angibt, ob ein Artefakt vorhanden ist ("1") oder nicht ("0"). Die Grundwahrheit kann aber auch Typen für Artefakte angeben und/oder deren Positionen in den jeweiligen Bildern. Es sei angemerkt, dass typische Bildartefakte wohlbekannt sind und durchaus auch künstlich in (artefaktfreie) Bilder eingefügt werden können. Auf diese Weise können sehr schnell sehr große Mengen an Trainings-Datensätzen erstellt werden.

Ein Prüfmodul, welches mit Rohdaten arbeiten soll, kann dadurch trainiert werden, dass die rekonstruierten Bilder nach Artefakten überprüft und entsprechend mit einer Grundwahrheit versehen werden, die Rohdaten aber die Bilddaten der Trainings-Datensätze bilden. Es ist aber auch hier möglich (wenn auch rechenaufwändig) synthetische Bildartefakte in rekonstruierte Bilder einzufügen und diese wieder auf die Rohdaten zurückzukonvertieren.

Das Ausgeben der Informationen zu den erkannten Bildartefakten kann auf mannigfaltige Weise erfolgen. Dabei ist es bevorzugt, dass ein Hersteller über die Ergebnisse informiert wird. Beispielsweise können die Informationen abgespeichert werden und insbesondere auch statistische Berechnungen basierend auf den Informationen. Auf diese kann dann von außen durch ein Netzwerk zugegriffen werden, um sie herunterzuladen. Die Informationen können aber auch direkt über ein Netzwerk an einen Hersteller gesendet werden.

Wichtig ist, dass die Bilddaten automatisch der Prüf-Vorrichtung zugehen, automatisch an das Prüfmodul zur Verarbeitung gegeben werden und Ergebnisse des Prüfmoduls (automatisch) ausgegeben werden.

Ein erfindungsgemäßes Prüf-Verfahren dient zur Überprüfung von medizinischen Bildern mit einer Prüf-Vorrichtung gemäß der Erfindung. Es umfasst die folgenden Schritte:
- Bereitstellen von Bilddaten von mindestens einem medizintechnischen Bildgebungssystem, wobei aufgenommene Bilddaten automatisch empfangen werden und/oder automatisch auf Bilddaten in einem Speicher zugegriffen wird,
- Überprüfen der Bilddaten auf Bildartefakte mit dem Prüfmodul der Prüf-Vorrichtung, wobei bereitgestellte Bilddaten automatisch in das Prüfmodul eingegeben werden,
- Ausgeben von Informationen zu den erkannten Bildartefakten, wobei Ergebnisse des Prüfmoduls automatisch ausgegeben werden.

Im Grunde wurde das Prüf-Verfahren bereits oben mit der Prüf-Vorrichtung zusammen beschrieben. Das Bereitstellen der Bilddaten erfolgt dadurch, dass diese von einem medizintechnischen Bildgebungssystem der Prüf-Vorrichtung zugesandt werden oder aus einem Datenstrom abgegriffen werden. Die Bilddaten können aber auch aktiv von einem Speicherbereich heruntergeladen werden z.B. aus einer Datenbank. Es ist dabei unerheblich, ob dies direkt oder über ein Datennetzwerk erfolgt. Einzig wichtig ist, dass die Bilddaten dem Prüf-Verfahren zur Verfügung stehen.

Das Überprüfen der Bilddaten erfolgt vollautomatisch, indem diese in das Prüfmodul der Prüf-Vorrichtung eingegeben werden. Je nach dem Training des Prüfmoduls erhält man für eingegebene Bilddaten eine Klassifikation, die besagt, ob ein Artefakt vorhanden ist oder nicht oder auch Aussagen über Typen von Artefakten und/oder Positionen. Es ist auch bevorzugt, dass zu jeder solchen Klassifikation auch Informationen darüber vorliegen, mit welchem medizintechnischen Bildgebungssystem die Bilddaten aufgenommen worden sind, und/oder wann die Bilddaten aufgenommen worden sind und/oder von welcher Person sie aufgenommen worden sind, wobei insbesondere letztere auch verschlüsselt vorliegen kann.

Das Ausgeben der Informationen ist im Stand der Technik bekannt. Die Ausgabe kann ein aktives Senden zum Hersteller umfassen aber auch lediglich ein Abspeichern in einem Speicher, auf das das Ergebnis später abgerufen werden kann.

In der Praxis wird bevorzugt ein neuronales Netz (das Prüfmodul) angelernt, Artefakte wie z.B. Strichartefakte, Bandartefakte oder Center-Dot zu erkennen, bevorzugt basierend auf echten Kundendaten. Die Anwendung eines solchen angelernten neuralen Netzes bedarf keiner sehr großer Rechenleistung mehr und ist auch auf vergleichsweise leistungsschwachen Rechnern lauffähig. Die Prüf-Vorrichtung scannt dann z.B. einmal pro Nacht vorgegebene Speicherbereiche nach neuen Bildern ab, überprüft die Bilder nach Artefakten und klassifiziert sie. Die Anzahl der Artefakte und deren Typ wird dann als Ergebnis ausgegeben. Das Ergebnis wird an einen Hersteller übertragen. Die Überprüfung wird also nicht für die Befundung angewendet, sondern dient nur der Identifikation von Bildartefakten. Die Bilddaten müssen dafür die medizinische Einrichtung nicht verlassen, was für die Datensicherheit und für die Anonymität vorteilhaft ist. Durch das Ergebnis kann ein relativ gutes Bild gewonnen werden wie oft und wie stark ein Artefaktproblem bei verwendeten Systemen auftaucht und so können gezielter Maßnehmen dagegen entwickelt werden. Des Weiteren könnten basierend auf dem Ergebnis proaktiv Serviceeinsätze geplant werden, wenn klar ist, dass sich an einem System die Bildqualität im Laufe der Zeit verschlechtert.

Eine erfindungsgemäße Steuereinrichtung für ein medizintechnisches Bildgebungssystem. umfasst eine Prüf-Vorrichtung gemäß der Erfindung. Alternativ oder zusätzlich ist sie zur Durchführung des Prüf-Verfahrens gemäß der Erfindung ausgelegt.

Ein erfindungsgemäßes medizintechnisches Bildgebungssystem umfasst eine Steuereinrichtung gemäß der Erfindung.

Das Verfahren kann auch als computerimplementiertes Verfahren bezeichnet werden. Die Erfindung kann insbesondere in Form einer Rechnereinheit mit geeigneter Software realisiert sein. Die Rechnereinheit kann z.B. hierzu einen oder mehrere zusammenarbeitende Mikroprozessoren oder dergleichen aufweisen. Insbesondere kann sie in Form von geeigneten Softwareprogrammteilen in der Rechnereinheit realisiert sein. Eine weitgehend softwaremäßige Realisierung hat den Vorteil, dass auch schon bisher verwendete Rechnereinheiten auf einfache Weise durch ein Software- bzw. Firmware-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Rechnereinheit ladbar ist, mit Programmabschnitten, um alle Schritte des erfindungsgemäßen Verfahrens auszuführen, wenn das Programm in der Rechnereinheit ausgeführt wird. Ein solches Computerprogrammprodukt kann neben dem Computerprogramm gegebenenfalls zusätzliche Bestandteile wie z.B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Rechnereinheit und/oder zur Speicherung an oder in der Rechnereinheit kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Eine bevorzugte Prüf-Vorrichtung zeichnet sich dadurch aus, dass die Bilddaten aufgenommene Bilder, Rohdaten von Bildaufnahmen und/oder aus Rohdaten rekonstruierte Bilder sind (oder zumindest umfassen) und die Datenschnittstelle dazu ausgelegt ist, auf eine Datenbank mit medizinischen Bildern und/oder auf Datenströme von medizintechnischen Bildgebungssystemen zuzugreifen. Es ist bevorzugt, dass die Bilddaten von einem bestimmten Typ sind, also nur aufgenommene Bilder oder Rohdaten oder rekonstruierte Bilder, bzw. nur MRT-Aufnahmen oder nur CT-Aufnahmen oder nur Radiographie-Aufnahmen, weil dies ein Training vereinfacht.

Insbesondere wenn Bildgebungssysteme unterschiedlichen Typs überprüft werden sollen, bietet es sich an, mehrere Prüfmodule zu verwenden, die mit unterschiedlichen Typen trainiert worden sind. Beispielsweise kann es sich anbieten, wenn Röntgensysteme, CT-Systeme und MRT-Systeme überwacht werden sollen, für die Röntgensysteme ein erstes Prüfmodul zu verwenden, welches auf Bilddaten trainiert worden ist, für CT-Systeme ein zweites Prüfmodul zu verwenden, welches auf CT-Rohdaten oder rekonstruierte CT-Bilder trainiert worden ist und für MRT-Systeme ein drittes Prüfmodul zu verwenden, welches auf MRT-Rohdaten oder rekonstruierte MRT-Bilder trainiert worden ist. Die Prüf-Vorrichtung kann also durchaus mehrere Prüfmodule umfassen, die unterschiedlich trainiert worden sind und/oder unterschiedliche Architekturen aufweisen. Es kann sich aber auch anbieten, für jedes System eine eigene Prüf-Vorrichtung zu verwenden.

Eine bevorzugte Prüf-Vorrichtung zeichnet sich dadurch aus, dass das Prüfmodul mit Bilddaten als Trainingsdaten trainiert worden ist, in denen Bildartefakte als Grundwahrheit markiert worden sind. Es ist dabei bevorzugt, dass dazu artefaktfreie Bilddaten mit Bildartefakten versehen worden sind und diese Bildartefakte markiert wurden. Dadurch können sehr schnell große Mengen an markierten Trainingsdaten erzeugt werden.

Eine bevorzugte Prüf-Vorrichtung zeichnet sich dadurch aus, dass das Prüfmodul eine Klassifikations-Einheit aufweist, und dazu trainiert worden ist, unterschiedliche Artefakt-Typen zu unterscheiden. Bevorzugte Artefakt-Typen sind Artefakte der Gruppe Strichartefakte, Bandartefakte, Wellenartefakte und Center-Dot-Artefakte. Wie oben beschrieben kann dies durch ein entsprechendes Training erreicht werden und durch eine Architektur des Prüfmoduls, die eine Wahrscheinlichkeit für unterschiedliche Klassifikationen als Ergebnis ausgibt.

Die Klassifikations-Einheit kann eine separate Einheit sein oder Teil des Prüfmoduls. Beispielsweise könnten die letzte(n) Schicht(en) des Prüfmoduls mit mehreren Ausgangsnoden für Wahrscheinlichkeiten unterschiedlicher Artefakt-Typen die Klassifikations-Einheit darstellen. Ein solche Prüfmodul kann mit Trainingdaten trainiert werden, in denen Artefakt-Typen als Grundwahrheit markiert worden sind.

Eine bevorzugte Prüf-Vorrichtung umfasst eine Statistik-Einheit dazu ausgelegt, die Anzahl der vom Prüfmodul erkannten Bildartefakte im Verhältnis zu den überprüften Sätzen von Bilddaten anzugeben, bevorzugt aufgeschlüsselt in mehrere Artefakt-Typen. Bevorzugt wird also die ermittelte Anzahl von Artefakten durch die Gesamtanzahl der überprüften Bilder geteilt, wobei die ermittelte Anzahl auch nach Artefakt-Typen aufgeschlüsselt sein kann. Es ist auch bevorzugt, dies getrennt für unterschiedliche Bildnahmesysteme durchzuführen, damit die Qualität der einzelnen Systeme überprüft werden kann.

Eine bevorzugte Prüf-Vorrichtung zeichnet sich dadurch aus, dass das Prüfmodul eine Messeinheit umfasst, welche die rechentechnische Auslastung der Instanz misst, von der die Bilddaten erhalten werden, und in dem Fall, dass die Auslastung unter einem Grenzwert liegt, Bilddaten überprüft werden und in dem Fall, dass die Auslastung über einem Grenzwert liegt, kein Zugriff auf Bilddaten erfolgt. Es wird damit also ermittelt, wann eine Überprüfung am wenigsten störend ist.

Eine bevorzugte Prüf-Vorrichtung ist dazu ausgelegt, nach einer Aufnahme eines Bildes die betreffenden Bilddaten zu überprüfen. So können, wie oben bereits gesagt, Bilder direkt auf Artefakte überprüft werden.

Eine bevorzugte Prüf-Vorrichtung ist dazu ausgelegt, zu festgelegten Zeitpunkten alle in einem festgelegten Zeitintervall aufgenommenen Bilddaten zu überprüfen. Dies kann z.B. des Nachts oder an Wochenenden geschehen. Das System scannt z.B. einmal pro Nacht die neuen Bilddaten nach Bildartefakten, ermittelt deren Anzahl und klassifiziert sie. Bevorzugt verlassen die Bilddaten dazu die medizinische Einrichtung nicht, was aus Datenschutzgründen vorteilhaft ist.

Eine bevorzugte Prüf-Vorrichtung ist dazu ausgelegt, zusätzlich zu den Bilddaten weitere Daten zur entsprechenden Bildaufnahme zu erhalten und auszugeben, bevorzugt zumindest zu einem oder mehreren Parametern der Gruppe Typ des Bildgebungssystems, Aufnahmezeitpunkt, Aufnahmedauer und aufnehmende Person.

Gemäß einer bevorzugten Ausführungsform des Prüf-Verfahrens werden unterschiedliche Artefakt-Typen unterschieden, bevorzugt umfassend Artefakte der Gruppe Strichartefakte, Bandartefakte, Wellenartefakte und Center-Dot-Artefakte. Es werden dabei Informationen zu den Artefakt-Typen der erkannten Bildartefakte ausgegeben.

Es ist bevorzugt, dass bei einer Ausführungsform des Prüf- Verfahrens die Anzahl der vom Prüfmodul erkannten Bildartefakte im Verhältnis zu den überprüften Sätzen von Bilddaten ermittelt und ausgegeben werden, bevorzugt aufgeschlüsselt in mehrere Artefakt-Typen. Durch das Ergebnis kann ein relativ gutes Bild gewonnen werden, wie oft und wie stark ein Artefaktproblem im Feld auftaucht und so können gezielter Maßnahmen dagegen entwickelt werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine grob schematische Darstellung eines CT-Systems mit einer erfindungsgemäßen Vorrichtung,
Figur 2 ein Blockdiagramm für ein erfindungsgemäßes Prüf-Verfahren,
Figur 3 einen Ablauf eines erfindungsgemäßen Prüf-Verfahrens mit einer Klassifikation von Artefakt-Typen.

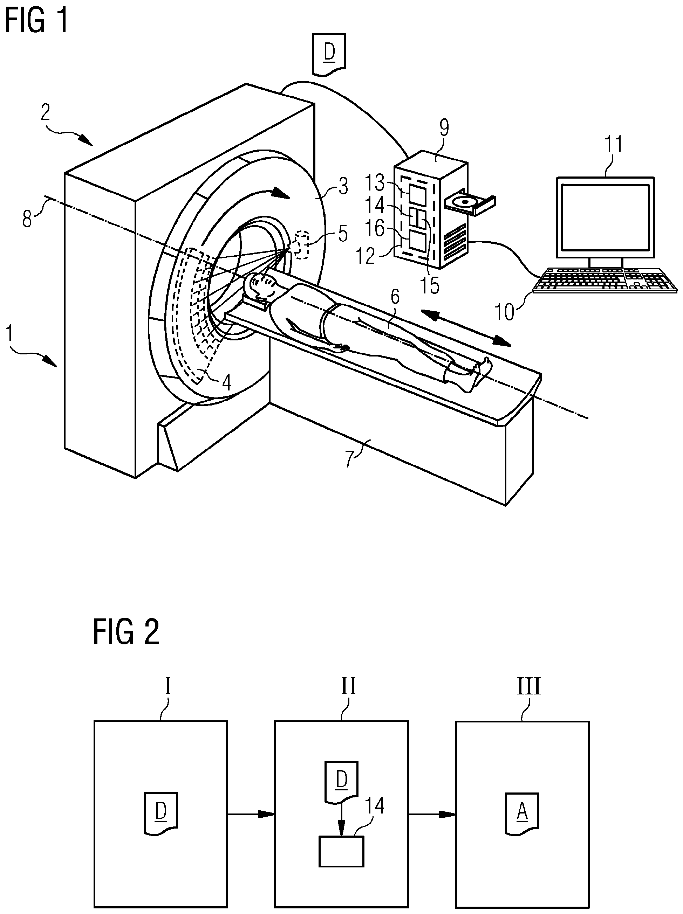

Figur 1 zeigt ein Computertomographie-System (CT-System 1) als Beispiel für ein medizintechnisches Bildgebungssystem 1 mit einem Strahlungsdetektor 4 und einer Röntgenquelle 5. Die Röntgenquelle 5 ist dazu ausgebildet, den Strahlungsdetektor 4 mit Röntgenstrahlung zu belichten. Das gezeigte CT-System 1 umfasst eine Gantry 2 mit einem Rotor 3. Der Rotor 3 umfasst die Röntgenquelle 5 und den Strahlungsdetektor 4, welcher ausgebildet ist Röntgenstrahlung zu detektieren.

Der Rotor 3 ist um die Rotationsachse 8 drehbar. Ein Patient 6, ist auf der Patientenliege 7 gelagert und ist entlang der Rotationsachse 8 durch die Gantry 2 bewegbar. Zur Steuerung des CT-Systems 1 und/oder zur Erzeugung eines Bilddatensatzes basierend auf vom Strahlungsdetektor 4 detektierten Signalen ist die Recheneinheit 9 vorgesehen.

Es wird üblicherweise aus einer Vielzahl an Winkelrichtungen ein (Roh-) Röntgenbilddatensatz des Patienten 6 mittels des Strahlungsdetektors 4 aufgenommen. Anschließend kann basierend auf dem (Roh-) Röntgenbilddatensatz mittels eines mathematischen Verfahrens, beispielsweise umfassend eine gefilterte Rückprojektion oder ein iteratives Rekonstruktionsverfahren, ein Bilddatensatz rekonstruiert werden.

Es sind hier Bilddaten D angedeutet, die Rohdaten von Bildaufnahmen und/oder aus Rohdaten rekonstruierte CT-Bilder sein können. In diesem Beispiel kann angenommen werden, es handele sich um CT-Bilder.

Die Recheneinheit 9 dient hier als Steuereinrichtung 9 zur Steuerung des CT-Systems 1. Mit dieser Recheneinheit 9 ist eine Eingabeeinrichtung 10 und eine Ausgabeeinrichtung 11 verbunden. Die Eingabeeinrichtung 10 und die Ausgabeeinrichtung 11 können z.B. eine Interaktion durch einen Anwender oder die Darstellung eines erzeugten Bilddatensatzes ermöglichen.

Die Steuereinrichtung 9 umfasst eine Prüf-Vorrichtung 12 zur Überprüfung von medizinischen Bildern umfassend eine Datenschnittstelle 13, ein Prüfmodul 14 mit einer Klassifikations-Einheit 15 und eine Statistik-Einheit 16. Die Prüf-Vorrichtung 12 ist dabei dazu ausgelegt, die Bilddaten D zu empfangen, automatisch an das Prüfmodul 14 zur Verarbeitung zu geben und Ergebnisse des Prüfmoduls 14 auszugeben.

Die Datenschnittstelle 13 dient zum Zugreifen auf Bilddaten D von medizintechnischen Bildgebungssystemen 1, und zum Ausgeben von Informationen zu den erkannten Bildartefakten A, inclusive ihres Typs und statistischen Angaben.

Das maschinenlernfähige Prüfmodul 14 ist dazu trainiert worden, Bildartefakte A in den empfangenen Bilddaten D zu erkennen. Es wurde dazu mit Bilddaten D als Trainingsdaten trainiert, in denen Bildartefakte A als Grundwahrheit markiert worden sind. Das Prüfmodul 14 ist mit einer Klassifikations-Einheit 15 ausgestattet, welches durchaus die letzte Schicht eines vollvernetzten neuronalen Netzwerks sein kann oder ein zusätzliches maschinenlernfähiges Modul. Die Klassifikations-Einheit 15, hier mit dem gesamten Prüfmodul 14, wurde dazu trainiert, unterschiedliche Artefakt-Typen T zu unterscheiden, z.B. umfassend Artefakte der Gruppe Strichartefakte, Bandartefakte, Wellenartefakte und Center-Dot-Artefakte.

Die Statistik-Einheit 16 ist dazu ausgelegt, die Anzahl der vom Prüfmodul 14 erkannten Bildartefakte A im Verhältnis zu den überprüften Sätzen von Bilddaten D anzugeben, hier auch aufgeschlüsselt in mehrere Artefakt-Typen T.

In diesem Beispiel ist die Prüf-Vorrichtung 12 auch dazu ausgelegt, zusätzlich zu den Bilddaten D weitere Daten zur entsprechenden Bildaufnahme zu erhalten und auszugeben, bevorzugt zumindest zu einem oder mehreren Parametern der Gruppe Typ des Bildgebungssystems 1, Aufnahmezeitpunkt, Aufnahmedauer und aufnehmende Person.

Figur 2 zeigt ein Prüf-Verfahren zur Überprüfung von medizinischen Bildern.

In Schritt I werden Bilddaten D von medizintechnischen Bildgebungssystemen 1 bereitgestellt, wobei aufgenommene Bilddaten D automatisch empfangen werden und/oder es wird automatisch auf Bilddaten D in einem Speicher zugegriffen.

In Schritt II werden die Bilddaten D mit dem Prüfmodul 14 der Prüf-Vorrichtung 12 auf Bildartefakte A überprüft, wobei bereitgestellte Bilddaten D automatisch in das Prüfmodul 14 eingegeben werden. Es werden dabei bevorzugt unterschiedliche Artefakt-Typen T unterschieden, bevorzugt umfassend Artefakte der Gruppe Strichartefakte, Bandartefakte, Wellenartefakte und Center-Dot-Artefakte.

In Schritt III werden Informationen zu den erkannten Bildartefakten A ausgegeben, wobei Ergebnisse des Prüfmoduls 14 automatisch ausgegeben werden. Es werden dabei bevorzugt Informationen zu den Artefakt-Typen T der erkannten Bildartefakte A ausgegeben.

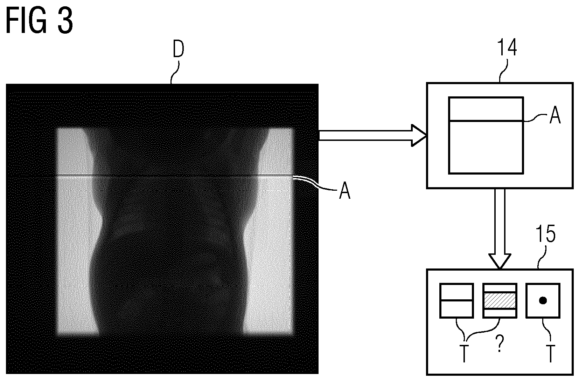

Figur 3 zeigt einen Ablauf eines erfindungsgemäßen Prüf-Verfahrens mit einer Klassifikation von Artefakt-Typen. Links ist ein Projektionsbild als Beispiel für Bilddaten D zu erkennen, in dem ein zeilenförmiges Bildartefakt A zu sehen ist. Dieses Bild wird in das Prüfmodul 14 eingegeben, welches das Bildartefakt A erkennt. In dem hier dargestellten Beispiel existiert eine zusätzliche Klassifikations-Einheit 15, die eine Klassifikation des erkannten Bildartefakts vornimmt. In der Praxis kann das Prüfmodul 14 auch als Klassifikations-Einheit 15 ausgestaltet sein oder die letzte(n) Schicht(en) des Prüfmoduls 14 können die Klassifikations-Einheit 15 sein. In diesem Beispiel vergleicht die Klassifikations-Einheit 15 das Bildartefakt mit vorgegebenen Artefakt-Typen T und gibt den nächstliegenden Artefakt-Typ T aus.

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen. Unabhängig vom grammatikalischen Geschlecht eines bestimmten Begriffes sind Personen mit männlicher, weiblicher oder anderer Geschlechteridentität mit umfasst.

## Patentansprüche

1. Prüf-Vorrichtung (12) zur Überprüfung von medizinischen Bildern (D), die Prüf-Vorrichtung (12) umfassend:
- eine Datenschnittstelle (13) ausgelegt zum Zugreifen auf Bilddaten (D) von medizintechnischen Bildgebungssystemen (1),
- ein maschinenlernfähiges Prüfmodul (14), welches dazu trainiert worden ist, Bildartefakte (A) in Bilddaten (D) zu erkennen,
- eine Datenschnittstelle (13) ausgelegt zum Ausgeben von Informationen zu den erkannten Bildartefakten (A),
wobei die Prüf-Vorrichtung (12) dazu ausgelegt ist, aufgenommene Bilddaten (D) zu empfangen und/oder automatisch auf Bilddaten (D) in einem Speicher zuzugreifen, automatisch an das Prüfmodul (14) zur Verarbeitung zu geben und Ergebnisse des Prüfmoduls (14) auszugeben.

2. Prüf-Vorrichtung (12) nach Anspruch 1, wobei die Bilddaten (D) aufgenommene Bilder, Rohdaten von Bildaufnahmen und/oder aus Rohdaten rekonstruierte Bilder sind und die Datenschnittstelle (13) dazu ausgelegt ist, auf eine Datenbank mit medizinischen Bildern und/oder auf Datenströme von medizintechnischen Bildgebungssystemen (1) zuzugreifen.

3. Prüf-Vorrichtung (12) nach einem der vorangehenden Ansprüche, wobei das Prüfmodul (14) mit Bilddaten (D) als Trainingsdaten trainiert worden ist, in denen Bildartefakte (A) als Grundwahrheit markiert worden sind, bevorzugt wobei dazu artefaktfreie Bilddaten (D) mit Bildartefakten (A) versehen worden sind und diese Bildartefakte (A) markiert wurden.

4. Prüf-Vorrichtung (12) nach einem der vorangehenden Ansprüche, wobei das Prüfmodul (14) eine Klassifikations-Einheit (15) aufweist, und dazu trainiert worden ist, unterschiedliche Artefakt-Typen (T) zu unterscheiden, bevorzugt umfassend Artefakte der Gruppe Strichartefakte, Bandartefakte, Wellenartefakte und Center-Dot-Artefakte.

5. Prüf-Vorrichtung (12) nach einem der vorangehenden Ansprüche, zusätzlich umfassend eine Statistik-Einheit (16) dazu ausgelegt, die Anzahl der vom Prüfmodul (14) erkannten Bildartefakte (A) im Verhältnis zu den überprüften Sätzen von Bilddaten (D) anzugeben, bevorzugt aufgeschlüsselt in mehrere Artefakt-Typen (T).

6. Prüf-Vorrichtung (12) nach einem der vorangehenden Ansprüche, wobei das Prüfmodul (14) eine Messeinheit umfasst, welche die rechentechnische Auslastung der Instanz misst, von der die Bilddaten (D) erhalten werden, und in dem Fall, dass die Auslastung unter einem Grenzwert liegt Bilddaten (D) überprüft werden und in dem Fall, dass die Auslastung über einem Grenzwert liegt kein Zugriff auf Bilddaten (D) erfolgt.

7. Prüf-Vorrichtung (12) nach einem der vorangehenden Ansprüche, dazu ausgelegt nach einer Aufnahme eines Bildes die betreffenden Bilddaten (D) zu überprüfen oder zu festgelegten Zeitpunkten alle in einem festgelegten Zeitintervall aufgenommenen Bilddaten (D) zu überprüfen.

8. Prüf-Vorrichtung (12) nach einem der vorangehenden Ansprüche, dazu ausgelegt, zusätzlich zu den Bilddaten (D) weitere Daten zur entsprechenden Bildaufnahme zu erhalten und auszugeben, bevorzugt zumindest zu einem oder mehreren Parametern der Gruppe Typ des Bildgebungssystems (1), Aufnahmezeitpunkt, Aufnahmedauer und aufnehmende Person.

9. Computerimplementiertes Prüf-Verfahren zur Überprüfung von medizinischen Bildern (D), umfassend die Schritte:
- Bereitstellen von Bilddaten (D) von mindestens einem medizintechnischen Bildgebungssystem (1), wobei aufgenommene Bilddaten (D) automatisch empfangen werden und/oder automatisch auf Bilddaten (D) in einem Speicher zugegriffen wird,
- Überprüfen der Bilddaten (D) auf Bildartefakte (A) mit dem Prüfmodul (14) der Prüf-Vorrichtung (12), wobei bereitgestellte Bilddaten (D) automatisch in das Prüfmodul (14) eingegeben werden,
- Ausgeben von Informationen zu den erkannten Bildartefakten (A), wobei Ergebnisse des Prüfmoduls (14) automatisch ausgegeben werden.

10. Prüf-Verfahren nach Anspruch 9, wobei unterschiedliche Artefakt-Typen (T) unterschieden werden, bevorzugt umfassend Artefakte der Gruppe Strichartefakte, Bandartefakte, Wellenartefakte und Center-Dot-Artefakte, und wobei Informationen zu den Artefakt-Typen (T) der erkannten Bildartefakte (A) ausgegeben werden.

11. Prüf- Verfahren nach Anspruch 9 oder 10 wobei die Anzahl der vom Prüfmodul (14) erkannten Bildartefakte (A) im Verhältnis zu den überprüften Sätzen von Bilddaten (D) ermittelt und ausgegeben werden, bevorzugt aufgeschlüsselt in mehrere Artefakt-Typen (T).

12. Steuereinrichtung (9) für ein medizintechnisches Bildgebungssystem (1) umfassend eine Prüf-Vorrichtung (12) nach einem der Ansprüche 1 bis 8 oder ausgelegt zur Durchführung des Prüf-Verfahrens nach einem der Ansprüche 9 bis 11.

13. Medizintechnisches Bildgebungssystem (1) umfassend eine Steuereinrichtung (9) nach Anspruch 12.

14. Computerprogrammprodukt, umfassend Befehle, die bei der Ausführung des Programms durch einen Computer diesen veranlassen, die Schritte des Verfahrens nach einem der Ansprüche 9 bis 11 auszuführen.

15. Computerlesbares Speichermedium, umfassend Befehle, die bei der Ausführung durch einen Computer diesen veranlassen, die Schritte des Verfahrens nach einem der Ansprüche 9 bis 11 auszuführen.
